# EUROPÄISCHE PATENTANMELDUNG

(11) **EP 3 184 250 A1**
(43) Veröffentlichungstag der Anmeldung: **28.06.2017**
(21) Anmeldenummer: 15201884.2
(22) Anmeldetag: 22.12.2015
(51) Int. Cl.: B25C 1/08

(54) **BRENNGASBETRIEBENES EINTREIBGERÄT**

(71) Anmelder: HILTI Aktiengesellschaft, 9494 Schaan (LI)
(72) Erfinder: Dittrich, Tilo, 6800 Feldkirch (AT); Heeb, Norbert, 9470 Buchs (CH); Bruggmueller, Peter, 6719 Bludesch (AT); Schmidt, Dominik, 9470 Buchs (CH)
(74) Vertreter: Hilti Aktiengesellschaft Corporate Intellectual Property

(57) **Zusammenfassung**

Die Erfindung betrifft ein Eintreibgerät, umfassend, einen in einem Zylinder (3) geführten Eintreibkolben (4) zum Eintreiben eines Nagelglieds in ein Werkstück, und eine an dem Eintreibkolben (4) angeordnete Brennkammer (2), die mit einem zündfähigen Brenngasgemisch befüllbar ist, wobei mittels eines Aufladungsglieds (7) ein Überdruck des Brenngasgemisches in der Brennkammer (2) erzeugbar ist, wobei der Eintreibkolben (4) während einer Eintreibbewegung mittels einer ersten Dichtung (14) an einer Innenwand des Zylinders (3) gedichtet ist, wobei der Eintreibkolben in einer Ausgangsposition mittels einer zweiten, axial zu einer Kolbenachse (A) belasteten Dichtung (15) gegenüber der Brennkammer (2) abgedichtet ist.

## Beschreibung

Die Erfindung betrifft ein Eintreibgerät, insbesondere ein handgeführtes Eintreibgerät, nach dem Oberbegriff des Anspruchs 1.

EP 1 987 924 A1 beschreibt ein aufladbares Eintreibgerät, bei dem ein Eintreibkolben mittels einer ersten, radial vorragenden Dichtung an einer äußeren Zylinderwand geführt ist. Der Eintreibkolben hat zudem einen zylindrischen Vorsprung, mit dem er in einen gegenüber dem Zylinder verjüngten, hohlzylindrischen Austritt einer Brennkammer eingreift. An dem Vorsprung ist eine zweite, radial vorragende Dichtung angeordnet, die an einer Innenwand des Austritts in radialer Richtung anliegt.

Es ist die Aufgabe der Erfindung, ein Eintreibgerät anzugeben, das einen hohen Ladedruck der Brennkammer erlaubt.

Diese Aufgabe wird für ein eingangs genanntes Eintreibgerät erfindungsgemäß mit den kennzeichnenden Merkmalen des Anspruchs 1 gelöst. Durch das Vorsehen der in axialer Richtung belasteten Dichtung kann eine wohldefinierte Abdichtung der Brennkammer auch bei hohem Überdrück und über einen relativ langen Zeitraum gewährleistet werden. Dabei wird die zweite Dichtung bei einer Kolbenbewegung kaum bzw. gar nicht reibend belastet, was weiterhin zu einer hohen Standzeit der Dichtung führt. Bei entsprechender Ausgestaltung kann ein weiterer Vorteil der erfindungsgemäßen Dichtungsanordnung darin bestehen, dass die zweite Dichtung einen Anschlagpuffer für den rückgeführten Kolben ausbildet, so dass die bei Kolbenrückstellung entstehenden Stoßwellen reduziert werden.

Unter einem Überdruck des Brenngasgemisches im Sinne der Erfindung wird ein erhöhter Druck zur Steigerung der Eintreibenergie verstanden. Auch bei herkömmlichen, nicht aufgeladenen Geräten liegt der Druck des Brenngasgemisches meist etwas oberhalb eines Umgebungsdrucks, da das unter Druck stehende Brenngas zu der unter Atmosphärendruck stehenden Luft in der Brennkammer hinzugefügt wird. Dabei handelt es sich nur um eine geringe Druckerhöhung. Ein Überdruck im Sinne der Erfindung liegt bevorzugt um wenigstens 100 mbar, besonders bevorzugt um wenigstens 200 mbar über dem Atmosphärendruck.

Unter einer axialen Belastung der zweiten Dichtung wird im Sinne der Erfindung eine Kraftbeaufschlagung der Dichtung durch eine Dichtfläche verstanden, deren axiale, parallel zu der Kolbenachse gerichtete Kraftkomponente zumindest gleich groß oder größer ist als eine dazu senkrechte, radial zu der Kolbenachse gerichtete Kraftkomponente. Bevorzugt ist die axiale Kraftkomponente wenigstens doppelt so groß, besonders bevorzugt wenigstens dreimal so groß wie die radiale Komponente.

Bei einer bevorzugten Ausführungsform der Erfindung besteht die zweite Dichtung aus einem Polymer, bevorzugt einem Elastomer. Bei einem bevorzugten Elastomer kann es sich zum Beispiel um ein Naturkautschuk, ein Silikonkautschuk, einen Fluorkautschuk oder ein sonstiges fluoriertes Elastomer handeln. Solche Dichtungen haben eine hohe Dichtwirkung bei guter Toleranz gegenüber Verunreinigung oder Alterung der Dichtflächen.

Allgemein vorteilhaft ist es vorgesehen, dass der Eintreibkolben mittels einer Kolbenhalterung in der Ausgangsposition gehalten ist. Bevorzugt übt die Kolbenhalterung dabei eine definierte Mindesthaltekraft in Richtung der Kolbenachse auf den Eintreibkolben aus. Dies führt zu einem definierten Andrücken der Dichtung mit kontrollierter axialer Andruckkraft. Hierdurch kann der erlaubte Überdruck der Brennkammer, der der Andruckkraft entgegenwirkt, zuverlässig bestimmt werden. Die zuverlässige Abdichtung ist daher vorrangig durch die Kräfte der Kolbenhalterung und des Brennkammerüberdrucks bestimmt. Ein alterungsbedingter Materialzustand der Dichtung hat allenfalls einen nachrangigen Einfluss auf die Abdichtung.

In bevorzugter Weiterbildung umfasst die Kolbenhalterung dabei ein magnetisches Halteglied. Solche Halteglieder erzielen hohe Haltekräfte und unterliegen kaum einem mechanischen Verschleiß. Bei einer einfachen Ausführungsform kann das Haltglied ausschließlich auf Permanentmagneten basieren. Eine Anschlagdämpfung durch die zweite Dichtung bei Rückführung des Eintreibkolbens ist hierbei besonders vorteilhaft, da Permanentmagneten im Allgemeinen schlagempfindlich sind. Bei anderen Ausführungsformen kann auch eine Anordnung mit Elektromagneten vorgesehen sein.

Allgemein vorteilhaft kann die zweite Dichtung auf einer Brennkammerseite an einer federelastischen Blende anliegen. Eine solche Blende kann auf einfache Weise die Kraftbeaufschlagung der Dichtung durch ihre Elastizität reduzieren. Dies erlaubt zum Beispiel eine beliebig große axiale Haltekraft des Eintreibkolbens, ohne dass die Dichtung überbeansprucht wird. Zugleich kann die federelastische Blende einen zusätzlichen Anschlagpuffer für den rückgeführten Eintreibkolben ausbilden, um auftretende Stoßwellen weiter zu verringern.

Bei einer ersten bevorzugten Ausführungsform ist die zweite Dichtung ortsfest gegenüber der Brennkammer aufgenommen. Eine solche Anordnung erlaubt eine besonders gute Abschattung der Dichtung gegenüber heißen Brenngasen, so dass die thermische und chemische Stabilität der verwendeten Dichtung weniger kritisch ist.

Bei einer hierzu alternativen Ausführungsform ist die zweite Dichtung ortsfest gegenüber dem Eintreibkolben aufgenommen. Dies erlaubt einen einfachen Wartungszugang zu der Dichtung.

Es versteht sich, dass ein erfindungsgemäßes Eintreibgerät allgemein auch mehrere axial belastete Dichtungen aufweisen kann. Dabei kann sowohl ortsfest zu dem Eintreibkolben als auch ortsfest zu der Brennkammer eine Dichtung vorgesehen sein.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Schnittansicht eines erfindungsgemäßen Eintreibgerätes eines ersten Ausführungsbeispiels der Erfindung.
- Fig. 2: zeigt eine Detailansicht des Eintreibgerätes aus Fig. 1 vor der Auslösung eines Eintreibvorgangs.
- Fig. 3: zeigt das Eintreibgerät aus Fig. 2 während eines Eintreibvorgangs.
- Fig. 4: zeigt eine Detailansicht eines Eintreibgerätes gemäß einem zweiten Ausführungsbeispiel der Erfindung während eines Eintreibvorgangs.

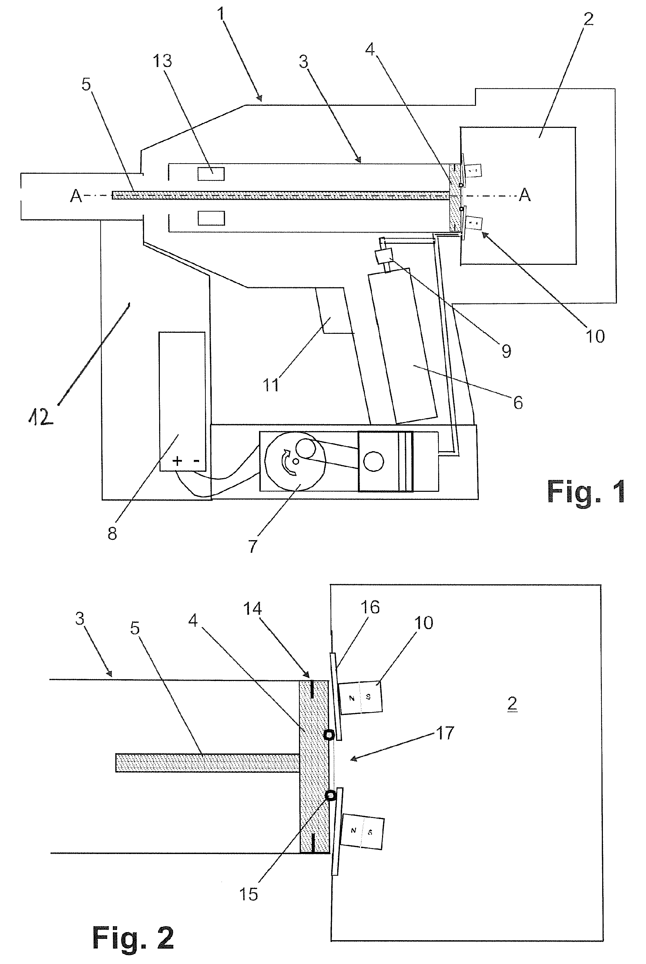

Das Eintreibgerät aus Fig. 1 ist ein handgeführtes Gerät, umfassend ein Gehäuse 1 und eine darin aufgenommene Brennkammer 2 mit einer Brennkammerwand. An die Brennkammer 2 grenzt ein Zylinder 3 mit einem darin geführten Eintreibkolben 4 an. Der Eintreibkolben 4 umfasst einen Eintreibstößel 5 zum Eintreiben eines Nagelglieds (nicht dargestellt) in ein Werkstück.

Ein zündfähiges Brenngasgemisch wird vorliegend mittels eines Brenngasspeichers 6 und insbesondere eines nicht gezeigten Frischlufteinlasses in die Brennkammer 2 eingebracht. Das Brenngasgemisch wird dabei mittels eines Aufladungsglieds 7 auf einen Überdruck komprimiert. Das Aufladungsglied ist beispielsweise als elektrisch angetriebener und über einen Akku 8 versorgter Kompressor ausgebildet, welcher als integraler Bestandteil des Eintreibgeräts innerhalb des Gehäuses 1 angeordnet ist. Bei weiteren Ausführungsformen ist das Aufladungsglied eine von dem Eintreibgerät abgetrennte Vorrichtung. Bei anderen Ausführungsformen kann eine Aufladung auch mittels einer insbesondere durch Verbrennung angetriebenen Rückstellung des Eintreibkolbens 4 oder auf sonstige Weise erfolgen.

Das Brenngas wird über ein Dosierventil 9 von dem Brenngasspeicher 6 in die Luft der Brennkammer 2 eingebracht. Die Brenngasinjektion kann je nach Anforderungen in die noch nicht komprimierte, teilkomprimierte oder auch vollständig komprimierte Luft erfolgen. Im vollständig rückgestellten Zustand (siehe Fig. 2) wird der Eintreibkolben 4 durch einen Kolbenhalter in Form eines Magnethalters 10 gegen den Überdruck in der Brennkammer gehalten.

Bei beladener Brennkammer kann dann über einen handbetätigten Trigger 11 eine Zündung des Brenngasgemisches beispielsweise über eine Zündkerze ausgelöst werden, so dass der Eintreibkolben 4 vorgetrieben wird und über den Eintreibstößel 5 das Nagelglied (nicht dargestellt) aus einem Magazin 12 in das Werkstück eintreibt. Die Abgase des gezündeten und expandierten Brenngases können zum Ende des Weges des Eintreibkolbens über Auslassöffnungen 13 in den Außenraum eintreten.

Zur Sicherstellung einer ausreichenden Abdichtung des Systems ist an dem Eintreibkolben 4 eine erste Dichtung 14 vorgesehen, die radial zu einer Kolbenachse A des Eintreibkolbens gegen die Innenwand des Zylinders 3 abgestützt ist. Diese erste Dichtung 14 kann zum Beispiel aus einem Metall oder einem harten, thermisch und mechanisch hochfesten Kunststoff wie Torlon (Polyamidimid) bestehen. Während der Eintreibbewegung des Eintreibkolbens 4 gleitet die Dichtung auf der Zylinderwand. Aufgrund der geringen Zeitdauer des Eintreibvorgangs ist nur eine relativ mäßige Dichtheit der ersten Dichtung erforderlich, um einen ausreichend kleinen Druckverlust während der Beschleunigung des Eintreibkolbens zu gewährleisten.

Um darüber hinaus eine ausreichende Abdichtung des unter Überdruck stehenden Brennkammervolumens vor einer Zündung des Brenngasgemisches zu gewährleisten, ist zudem eine zweite Dichtung 15 zwischen dem Eintreibkolben 4 und einer Austrittsöffnung 16 der Brennkammer 2 vorgesehen.

Die zweite Dichtung 15 ist vorzugsweise als O-Ring aus einem Elastomer ausgebildet und wird in axialer Richtung bezüglich der Kolbenachse A von dem Eintreibkolben 4 belastet. Die zweite Dichtung 4 ist an einem Boden des Eintreibkolbens 4 aufgenommen, zum Beispiel in einer Ringnut.

Eine dem Boden des Eintreibkolbens 4 gegenüberliegende Dichtfläche für die zweite Dichtung 15 wird vorliegend von einer Blende 16 gebildet, die eine Austrittsöffnung 17 der Brennkammer 2 ausbildet. Die Austrittsöffnung 17 hat einen kleineren Durchmesser als der Zylinder 3, und die zweite Dichtung 15 hat einen kleineren Durchmesser als die erste Dichtung 14.

Die Blende 16 ist aus einem definiert federelastischen Blech ausgebildet, das fest mit einer Fortsetzung der Brennkammerwand verbunden ist. Auf der dem Eintreibkolben 4 gegenüberliegenden Seite der Blende 16 sind Permanentmagnete 10 angeordnet, die die Kolbenhalterung für den Eintreibkolben in Form eines Magnethalters ausbilden.

Die Erfindung funktioniert nun wie folgt:
In der Ausgangsposition des Eintreibkolbens 4 nach Fig. 2 wird durch die Magnete 10 eine axial gerichtete Haltekraft auf den Eintreibkolben 4 ausgeübt, die wesentlich größer ist als eine durch den Überdruck in der Brennkammer ausgeübte, entgegengesetzte Kraft. Dabei wird die zweite Dichtung 15 von dem Eintreibkolben 4 gegen die federelastische Blende 16 gedrückt. Die Elastizität bzw. Verformbarkeit der Blende 16 verbessert eine sichere Halterung durch die Magnetkräfte verhindert zugleich eine Überbelastung der Dichtung 15.

In diesem Zustand kann die Brennkammer mit einem Überdruck beaufschlagt werden, wobei eine zuverlässige Abdichtung gegenüber dem Außenraum durch die zweite Dichtung 15 gegeben ist. Zwischen der Aufladung und der Zündung kann im Prinzip eine beliebig lange Zeit vergehen, in der eine Bedienperson das Eintreibgerät in seiner Position optimiert oder aus sonstigen Gründen abwartet.

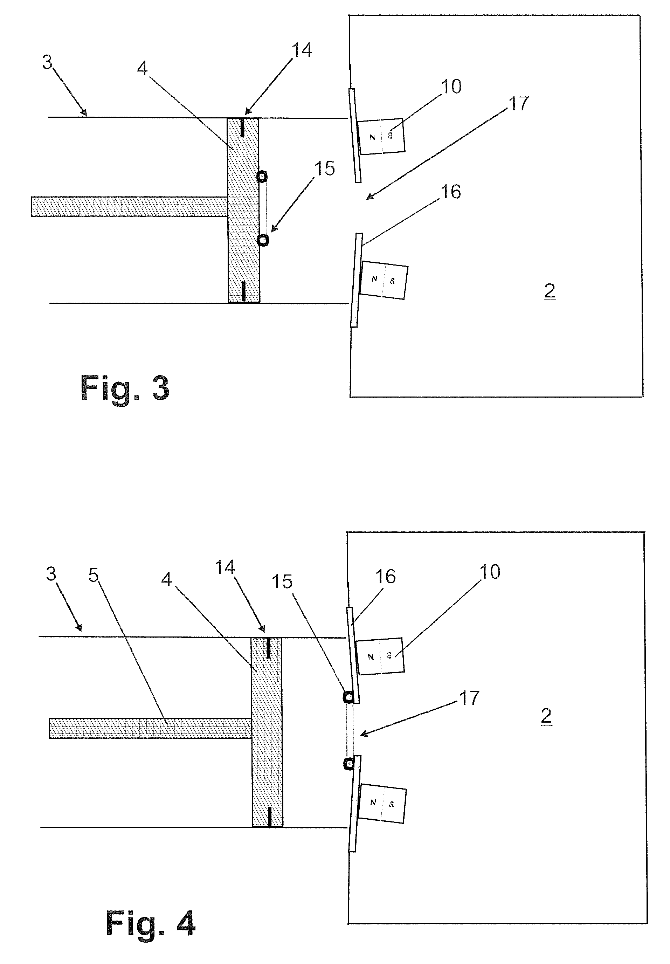

Nach Auslösen der Zündung wird die Haltekraft des Magnethalters 10 durch den ansteigenden Druck überwunden und der Eintreibkolben wird in Richtung des Nagelglieds beschleunigt (siehe Fig. 3). Während dieses Vorgangs wird das expandierende Brenngas nur über die erste Dichtung 14 gegenüber dem Außenraum abgedichtet. Im vorliegenden Beispiel wird die zweite Dichtung 15 mit dem Eintreibkolben mitbewegt, da sie ortsfest an diesem angeordnet ist. Dies erlaubt eine einfache Wartung der Dichtung nach Entnahme des Eintreibkolbens. Unter Umständen wird durch das Zurückhalten des Eintreibkolbens dessen erreichbare Energie und damit die Eintreibenergie gesteigert.

Bei dem in Fig. 4 gezeigten zweiten Ausführungsbeispiel der Erfindung befindet sich die zweite Dichtung 15 im Unterschied zu dem ersten Ausführungsbeispiel ortsfest an der Zylinderseite der Blende 16. Dies hat unter anderem den Vorteil, dass die Dichtung dem heißen Brenngasstrom weniger ausgesetzt ist.

## Patentansprüche

1. Eintreibgerät, umfassend
einen in einem Zylinder (3) geführten Eintreibkolben (4) zum Eintreiben eines Nagelglieds in ein Werkstück, und
eine an dem Eintreibkolben (4) angeordnete Brennkammer (2), die mit einem zündfähigen Brenngasgemisch befüllbar ist,
wobei insbesondere mittels eines Aufladungsglieds (7) ein Überdruck des Brenngasgemisches in der Brennkammer (2) erzeugbar ist,
wobei der Eintreibkolben (4) während einer Eintreibbewegung mittels einer ersten Dichtung (14) an einer Innenwand des Zylinders (3) gedichtet ist,
**dadurch gekennzeichnet,**
**dass** der Eintreibkolben in einer Ausgangsposition mittels einer zweiten, axial zu einer Kolbenachse (A) belasteten Dichtung (15) gegenüber der Brennkammer (2) abgedichtet ist.

2. Eintreibgerät nach Anspruch 1, **dadurch gekennzeichnet, dass** die zweite Dichtung (15) aus einem Polymer, insbesondere einem Elastomer, besteht.

3. Eintreibgerät nach einem der vorhergehenden Ansprüche, **dadurch gekennzeichnet, dass** der Eintreibkolben (4) mittels einer Kolbenhalterung (10) in der Ausgangsposition gehalten ist, wobei die Kolbenhalterung (10) insbesondere eine definierte Mindesthaltekraft in Richtung der Kolbenachse (A) auf den Eintreibkolben (4) ausübt.

4. Eintreibgerät nach Anspruch 3, **dadurch gekennzeichnet, dass** die Kolbenhalterung ein magnetisches Halteglied (10) umfasst.

5. Eintreibgerät nach einem der vorhergehenden Ansprüche, **dadurch gekennzeichnet, dass** die zweite Dichtung (15) auf einer Brennkammerseite an einer federelastischen Blende (16) anliegt.

6. Eintreibgerät nach einem der vorhergehenden Ansprüche, **dadurch gekennzeichnet, dass** die zweite Dichtung (15) ortsfest gegenüber der Brennkammer (12) aufgenommen ist.

7. Eintreibgerät nach einem der Ansprüche 1 bis 4, **dadurch gekennzeichnet, dass** die zweite Dichtung (15) ortsfest gegenüber dem Eintreibkolben (4) aufgenommen ist.

8. Eintreibgerät nach einem der vorhergehenden Ansprüche, **dadurch gekennzeichnet, dass** die zweite Dichtung (15) in einer Schwalbenschwanzführung des Kolbens angeordnet ist.
